**Europäisches Patentamt**

**European Patent Office**

**Office européen des brevets**

(19)

(11) Veröffentlichungsnummer : **0 340 222 B1**

(12) # EUROPÄISCHE PATENTSCHRIFT

(45) Veröffentlichungstag der Patentschrift :
25.03.92 Patentblatt 92/13

(51) Int. Cl.⁵ : **G07F 7/02, G06K 7/08**

(21) Anmeldenummer : **87907909.3**

(22) Anmeldetag : **11.12.87**

(86) Internationale Anmeldenummer :
**PCT/AT87/00075**

(87) Internationale Veröffentlichungsnummer :
**WO 88/04458 16.06.88 Gazette 88/13**

(54) **TRAGBARES HANDGERÄT ZUR MASCHINELLEN BEARBEITUNG VON AUF EINEM DATENTRÄGER ENTHALTENEN DATEN.**

(30) Priorität : **12.12.86 AT 3303/86**

(43) Veröffentlichungstag der Anmeldung :
**08.11.89 Patentblatt 89/45**

(45) Bekanntmachung des Hinweises auf die
Patenterteilung :
**25.03.92 Patentblatt 92/13**

(84) Benannte Vertragsstaaten :
**AT BE CH DE FR GB IT LI LU NL SE**

(56) Entgegenhaltungen :
**EP-A- 0 061 373**
**EP-A- 0 105 974**
**EP-A- 0 168 836**
**EP-A- 0 199 234**
**FR-A- 2 339 215**
**GB-A- 2 054 928**

(56) Entgegenhaltungen :
**GB-A- 2 170 338**
**US-A- 4 053 735**
**US-A- 4 277 837**
**US-A- 4 454 414**

(73) Patentinhaber : **Skidata Computer
Gesellschaft m.b.H.
Berchtesgadner Strasse 8
A-5083 Gartenau - St. Leonhard (AT)**

(72) Erfinder : **KOCZNAR, Wolfram
Lehmweg 16a
A-6020 Innsbruck (AT)**
Erfinder : **WALLERSTORFER, Kurt
Irrsdorf 130
A-5204 Stra walchen (AT)**

(74) Vertreter : **Torggler, Paul, Dr. et al
Patentanwälte Dr. Paul Torggler DDr.
Engelbert Hofinger Wilhelm-Greil-Strasse 16
A-6020 Innsbruck (AT)**

## Beschreibung

Die Erfindung betrifft ein tragbares Handgerät gemäß dem Oberbegriff des Patentanspruches 1 oder 2.

Ein derartiges Handgerät ist beispielsweise der EP-A 199 234 zu entnehmen und dient insbesondere zur Ausstellung von kartenförmigen Schecks, wobei der Aufdruck der in einem Magnetstreifen eingeschriebenen Daten dem Aussteller die Möglichkeit bietet, die Richtigkeit des Scheckbetrages unmittelbar zu überprüfen. Das Handgerät weist nacheinander einen magnetischen Lesekopf und einen magnetischen Schreibkopf, sowie an der gegenüberliegenden Seite der Führungsbahn einen unbeweglich angeordneten Thermodruckkopf auf. Das Ausstellen von Schecks ist eine relativ seltene Tätigkeit, sodaß die Verschmutzung und Abnützung des Thermodruckkopfes auch über längere Zeit relativ gering ist. Weiters wird beim Ausstellen von Schecks der sichtbar zu machende Text grundsätzlich auf dasselbe Feld aufgedruckt.

Ein weiteres Handgerät ist beispielsweise der US-A 4,277,837 zu entnehmen. Es dient insbesondere zur Durchführung finanzieller Transaktionen mit einem zweiten Handgerät oder einer anderen geeigneten Datenverarbeitungseinrichtung. Die auf dem einzuschiebenden Datenträger enthaltenen oder geänderten Daten können nur über das Display des Handgerätes sichtbar gemacht werden. Es besteht aber die Möglichkeit, die Daten und Datenveränderungen in einer stationären Einrichtung in Form eines Kontoauszuges ausdrucken zu lassen.

Aus der GB-A 2 170 338 ist ein ähnliches, tragbares Handgerät zum maschinellen Lesen von Fahrkarten bekannt. Es wird ausschließlich für die Gültigkeitsüberprüfung von Magnetkarten eingesetzt, deren Daten ebenfalls nur auf dem Display des Handgerätes ablesbar sind. Eine Veränderung der Daten auf der Fahrkarte ist nicht beabsichtigt und damit auch nicht möglich.

Der EP-A 168 836 beschreibt eine Wertkarte, insbesondere zur Verwendung in Geldausgabeautomaten, sowie einen dem Geldausgabeautomaten zugehörigen Kartenleser, wobei die Wertkarte außer dem Speicher auch ein Display zur Anzeige der enthaltenen und veränderten Daten nebst den erforderlichen Betriebselementen enthält.

Schließlich ist aus der US-A 4,053,735 ein Handgerät bekannt, das zur Ausgabe gedeckter Schecks vorgesehen ist. Das Handgerät enthält einen Speicher für die Eingabe eines Guthabens vom Bankkonto, sowie einen Drucker zum Drucken von Scheckformularen bis zur Höhe des gespeicherten Guthabens. Es erfolgt hier kein maschinelles Lesen des zu bedruckenden Papiers, sondern ähnlich druckenden Taschenrechnern, nur der Ausdruck der im Handgerät durchgeführten Operation.

Weiters beschreibt die EP-A 105 974 eine Einrichtung zur maschinellen Bearbeitung von einen Magnetstreifen aufweisenden Karten verschiedener Verwendung, die einen Nadeldrucker aufweist. Die Einrichtung ist stationär angeordnet und klemmt eine eingeschobene Karte entlang ihres Querrandes an eine von einem Schrittmotor angetriebene Trommel, wobei sie am Druckkopf, am Lese- und am Schreibkopf vorbeibewegt wird. Diese sind auf über eine Nockensteuerung beweglichen Armen angeordnet, um durch die auf die Trommelkrümmung gezwungene Karte nicht beschädigt zu werden. Eine derartige Einrichtung läßt sich aufgrund der erforderlichen Dimensionen nicht als Handgerät einsetzen.

Die Erfindung hat es sich nun zur Aufgabe gestellt, ein tragbares Handgerät der eingangs genannten Art so auszubilden, daß der aktuelle Stand und jede Änderung der Wertkartendaten auf der Wertkarte in mehreren Druckzeilen ausgedruckt werden kann.

In einer einen Thermodruckkopf aufweisenden Einrichtung wird dies dadurch erreicht, daß dem Thermodruckkopf ein Antrieb zugeordnet ist, mittels dem er zwischen einer Ruhe- und zumindest einer Druckposition bewegbar ist.

Dieselbe Aufgabe wird auch dadurch gelöst, daß dem als Tintenstrahlschreibkopf ausgebildeten Druckkopf ein Antrieb zugeordnet ist, mittels dem er zwischen zur Führungsbahn der Wertkarte parallelen Zeilendruckpositionen verschiebbar ist.

Somit läßt sich auf der Wertkarte eine Auflistung der Bearbeitungsvorgänge erstellen, an deren Ende jeweils der aktuelle Datenstand aufscheint. Dadurch lassen sich eine Vielzahl von Anwendungsgebieten erschließen und neutrale Wertkarten quer durch alle Wirtschafts- und Dienstleistungsbereiche einsetzen. Jene Vielfalt von organisatorischen und kaufmännischen Operationen, die stationäre Datenverarbeitungsanlagen attraktiv machen, lassen sich somit einem breiteren Konsum- und Dienstleistungsbereich zugänglich machen. Dies ist insbesondere dort von Vorteil, wo von einem Unternehmen Leistungen an verschiedenen Orten oder zu verschiedenen Zeiten angeboten werden. Dazu gehören beispielsweise Vergnügungsparks, Hotels, Campingplätze, Fremdenverkehrsangebote, Verkehrsmittel, Abonnements für Theater, Konzerte, usw., Sammelabrechnungen von Tankstellen, Taxiunternehmen, Parkgaragen, Saisonkarten für Badeanstalten, Schilifte, Fitneßcenter, usw.

Ebensolche Vorteile ergeben sich, wenn mehrere Unternehmen ähnliche oder zusammengehörige Leistungen anbieten, beispielsweise Verkehrsverbundsysteme, regionale Schipässe, Veranstaltungen mit diffe-

2

renzierten Kaufoder Konsumangeboten usw.

Jeder Verkäufer, jede Bedienung, jeder Kontrollor kann somit mit seinem Handgerät Datenträger kontrollieren und entwerten. Da das kaum Zeit beansprucht, kann die konsumierte Leistung unmittelbar erfaßt werden. Ein unberechtigter Konsum kann weitgehend ausgeschlossen werden, da dem Verkäufer und dem Kunden ein Überblick über den augenblicklichen, lesbaren "Kontostand" des Datenträgers vermittelt wird. Dabei ist es an sich gleichgültig, ob die Bezahlung des Datenträgers im voraus oder im nachhinein erfolgt.

Es ergibt sich weiters der Vorteil, daß der Kunde den Wert eines im voraus bezahlten Datenträgers nach seinen individuellen Gegebenheiten bestimmen kann, da der dem Kunden zur Verfügung stehende, beliebige Betrag in den leeren Datenträger eingelesen werden kann. Der Kaufpreis entspricht daher ebensowenig einem Vielfachen einer Werteinheit, wie die abzubuchenden Beträge, also die einzelnen Teilentwertungen.

Die Eingabetastatur kann mit Fixwerttasten und(oder) Zifferntasten bzw. Funktionstasten versehen sein. Eine weitere Möglichkeit besteht darin, daß die Eingabetastatur eine durchsichtige Tastenfolie aufweist, der eine Kontaktplatte zugeordnet ist, wobei zwischen der Tastenfolie und der Kontaktplatte ein Einschubschlitz für ein auswechselbares Tastenschriftblatt vorgesehen ist. Hier kann mittels Funktionstasten die Tastenbelegung entsprechend dem gewählten Tastenschriftblatt erfolgen.

In einer anderen Ausführung weist die Eingabetastatur ein Flüssigkristalldisplay auf, das von einer Berührungskontaktfolie belegt ist, wobei die Tastenbelegung programmierbar ist. Hier kann dann ein gemeinsames hinterleuchtetes Flüssigkristalldisplay zur Datenanzeige und zur Tastenanzeige eingesetzt werden.

Da die Beleuchtung einen wesentlichen Anteil am Stromverbrauch besitzt, ist bevorzugt an der Oberseite des Gehäuses ein Beleuchtungssensor vorgesehen.

Für die notwendige Relativbewegung zwischen der Lese-Schreibeinrichtung und der Wertkarte ist es denkbar, die Wertkarte in der Einschubstellung zu fixieren und die Lese-Schreibeinrichtung im Gehäuse zwischen den entsprechenden Positionen zu verschieben. Wird eine motorische Wertkartentransporteinrichtung mit einem mechanischen Untersetzungsgetriebe vorgesehen, so weist diese bevorzugt vom Einschubschlitz schräg ausgehende und parallel zur Oberseite des Gehäuses abgewinkelte Seitenführungsnuten für die Wertkarte auf, wobei im Winkelbereich eine obere Transportwalze und untere Transportrollen vorgesehen sind.

Der Druckkopf kann einen von der Transporteinrichtung unabhängigen, eigenen Antrieb aufweisen. Ein für ein Handgerät vorteilhafter einziger Antriebsmotor für den Transport der Wertkarte und die Bewegung des Druckkopfes kann dann verwendet werden, wenn eine Kupplung zwischen dem Untersetzungsgetriebe und dem Druckkopfbewegungsteil vorgesehen ist. Eine Ausführung sieht dabei vor, daß der Druckkopf von einem an den Antrieb der Transporteinrichtung ankuppelbaren Exzenterglied beaufschlagt um eine Achse verschwenkbar ist. Als Kupplung ist insbesondere eine Magnetkupplung vorgesehen.

In dieser Ausführung wird eine platzsparende Konstruktion dadurch erreicht, daß die unteren Transportrollen mit Abstand koaxial angeordnet sind, und die obere Transportwalze die Druckunterlage für den zwischen den unteren Transportrollen angeordneten Thermodruckkopf bildet.

Eine zusätzliche Verfälschungssicherheit für die Wertkarte, auf der die maschinenlesbaren und die visuell lesbaren Informationen zerstörbar sind, kann dadurch erreicht werden, daß das Handgerät auch eine Kerboder Stanzeinrichtung zur Kennzeichnung der Wertkarte aufweist. Damit kann wenigstens die Anzahl der Bearbeitungsvorgänge erkannt werden.

Die Ausstellung der neutralen, indifferenten Wertkarten, die beispielsweise zwei Magnetspuren - eine für Stammdaten und die andere für variable Daten - aufweist, kann ebenfalls mit dem Handgerät erfolgen, da auf die Karte - ohne aufgedruckte Unterteilungen und festgelegte Anzahl von Werteinheiten - nur der Kaufpreis aufgedruckt wird.

In einer weiteren Ausführung kann eine Schnittstelle und/oder eine Infrarotwellensende-Empfangseinheit zum Dialog mit stationären Datenverarbeitungseinrichtungen vorgesehen sein. Für die Verbindung mit einer Registrierkasse oder einer stationären Datenverarbeitungsanlage ist es so beispielsweise möglich, diese mit einer Aufnahme zu versehen, in die das Handgerät nach Art einer Schublade einsetzbar ist. Dadurch können die über das Handgerät abgewickelten Leistungen auch statistisch ausgewertet oder Erlöse zwischen mehreren Unternehmen der jeweiligen Leistung entsprechend verteilt werden. Darüberhinaus kann das Handgerät eine Tageszeituhr, eine Batteriezustandskontrolle, einen Selbsttest, usw. aufweisen.

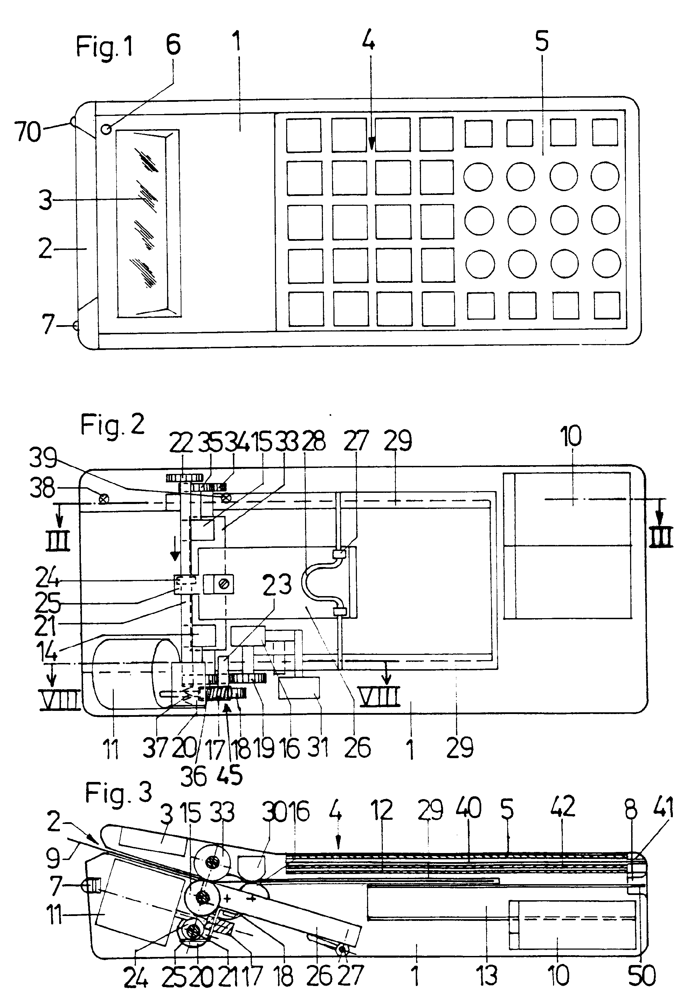

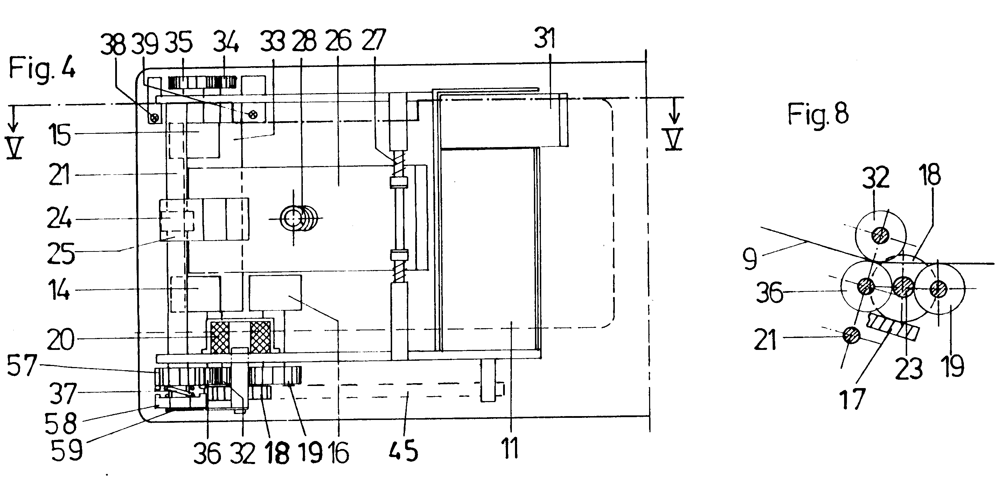

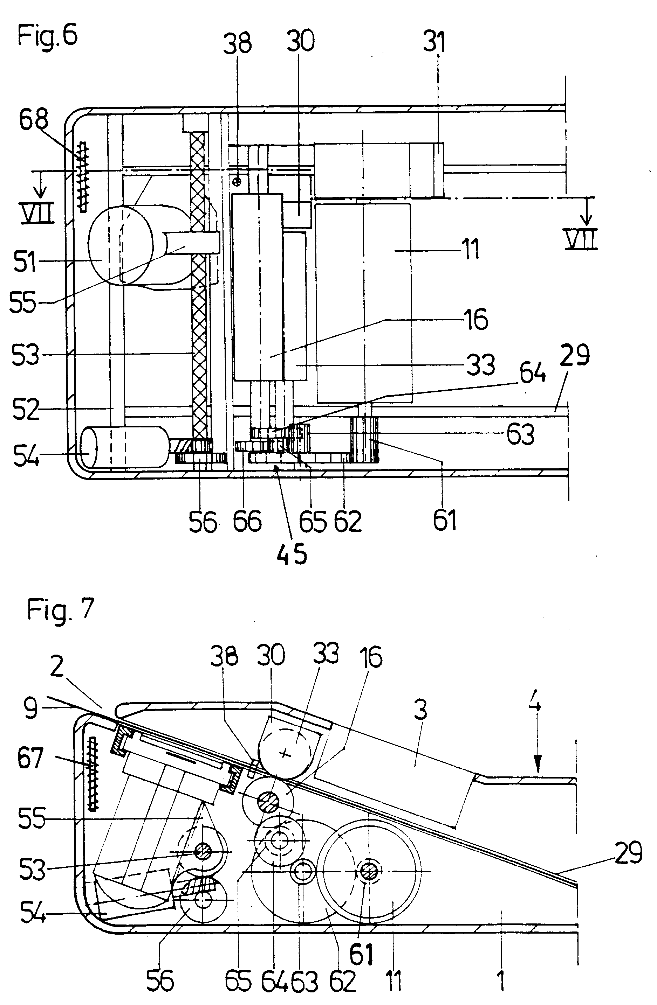

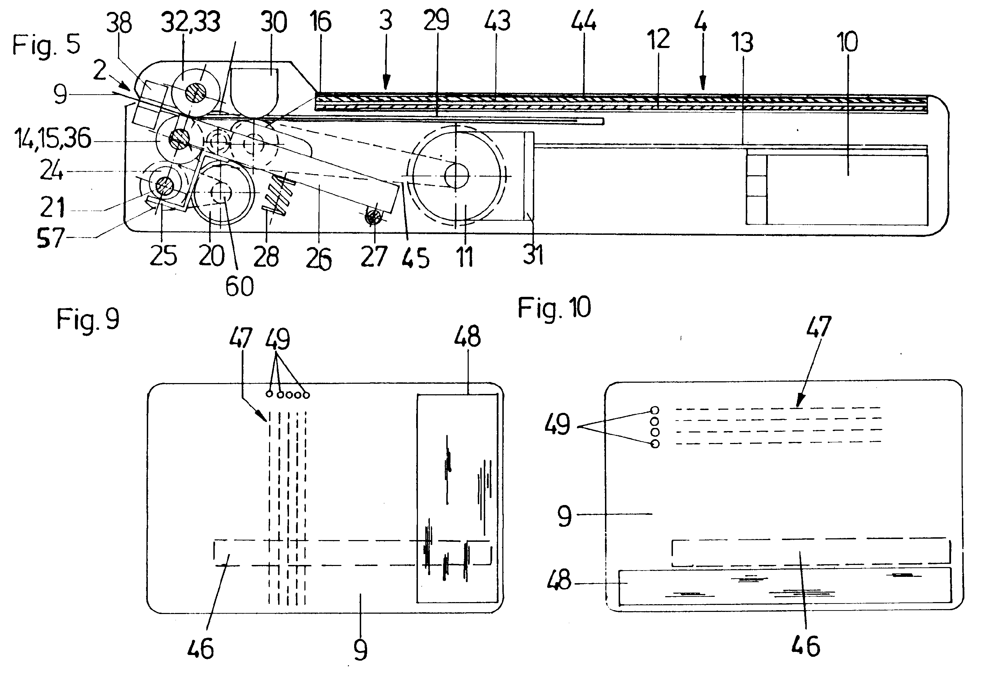

## Patentansprüche

1. Tragbares Handgerät zum maschinellen Bearbeiten von Wertkarten (9), mit einem Gehäuse (1), einem Display (3), einer Eingabetastatur (4), einem Rechner (13), einem Speicher, einer Stromquelle (10) und einer Lese-Schreibeinrichtung, die zum Lesen und Verändern der auf der Wertkarte (9) enthaltenen Daten einen Lese-, einen Schreib- und für die Sichtbarmachung des gegebenenfalls veränderten Dateninhalts auf der Wertkarte (9) einen Thermodruckkopf (26) aufweist, wobei das Gehäuse (1) mit einem Einschubschlitz (2) und einer anschließenden Führungsbahn für die Wertkarte (9) versehen ist, in deren Bereich die Lese-Schreibeinrichtung und eine elektrisch angetriebene Transporteinrichtung angeordnet sind, dadurch gekennzeichnet, daß dem Thermodruckkopf (26) ein Antrieb zugeordnet ist, mittels dem er zwischen einer Ruhe- und zumindest einer Druckposition bewegbar ist.

2. Tragbares Handgerät zum maschinellen Bearbeiten von Wertkarten (9), mit einem Gehäuse (1), einem Display (3), einer Eingabetastatur (4), einem Rechner (13), einem Speicher, einer Stromquelle (10) und einer Lese-Schreibeinrichtung, die zum Lesen und Verändern der auf der Wertkarte (9) enthaltenen Daten einen Lese-, einen Schreib- und für die Sichtbarmachung des gegebenenfalls veränderten Dateninhalts auf der Wertkarte (9) einen Druckkopf aufweist, wobei das Gehäuse (1) mit einem Einschubschlitz (2) und einer anschließenden Führungsbahn für die Wertkarte (9) versehen ist, in deren Bereich die Lese-Schreibeinrichtung und eine elektrisch angetriebene Transporteinrichtung angeordnet sind, dadurch gekennzeichnet, daß dem als Tintenstrahlschreibkopf (51) ausgebildeten Druckkopf ein Antrieb zugeordnet ist, mittels dem er zwischen zur Führungsbahn der Wertkarte (9) parallelen Zeilendruckpositionen verschiebbar ist.

3. Handgerät nach Anspruch 1 oder 2, dadurch gekennzeichnet, daß die Eingabetastatur (4) eine durchsichtige Tastenfolie (5) aufweist, der eine Kontaktplatte (42) zugeordnet ist, wobei zwischen der Tastenfolie (5) und der Kontaktplatte (42) ein Einschubschlitz (41) für ein auswechselbares Tastenschriftblatt (40) vorgesehen ist.

4. Handgerät nach Anspruch 1 oder 2, dadurch gekennzeichnet, daß die Eingabetastatur ein Flüssigkristalldisplay (43) aufweist, das von einer Berührungskontaktfolie (44) belegt ist, wobei die Tastenbelegung programmierbar ist.

5. Handgerät nach Anspruch 3 oder 4, dadurch gekennzeichnet, daß die Eingabetastatur (4) mit einer Leuchtfolie (12) hinterleuchtet ist.

6. Handgerät nach Anspruch 4, dadurch gekennzeichnet, daß ein gemeinsames, insbesondere hinterleuchtetes Flüssigkristalldisplay zur Datenanzeige und zur Tastenanzeige vorgesehen ist, wobei vorzugsweise an der Oberseite des Gehäuses (1) ein Beleuchtungssensor (6) vorgesehen ist.

7. Handgerät nach Anspruch 1 oder 2, mit einer Transporteinrichtung für die Wertkarte (9), die ein mechanisches Untersetzungsgetriebe (45) aufweist, dadurch gekennzeichnet, daß das Untersetzungsgetriebe eine Kupplung (20) enthält, und der Druckkopf (26,51) der Lese-Schreibeinrichtung über die Kupplung (20) an den Antrieb ankuppelbar ist.

8. Handgerät nach Anspruch 7, dadurch gekennzeichnet, daß die Transporteinrichtung vom Einschubschlitz (2) schräg ausgehende und parallel zur Oberseite des Gehäuses (1) abgewinkelte Seitenführungsnuten (29) für die Wertkarte (9) aufweist, wobei im Winkelbereich eine obere Transportwalze (33) und untere Transportrollen (14,15) vorgesehen sind.

9. Handgerät nach Anspruch 7 oder 8, dadurch gekennzeichnet, daß die Transporteinrichtung eine angetriebene untere Rolle (16) aufweist, der an der Oberseite der Führungsbahn der Lese-Schreibkopf (30) zugeordnet ist.

10. Handgerät nach Anspruch 9, dadurch gekennzeichnet, daß der Druckkopf von einem an den Antrieb (11) der Transporteinrichtung ankuppelbaren Exzenterglied (24) beaufschlagt um eine Achse (27) verschwenkbar ist.

11. Handgerät nach Anspruch 9 oder 10, dadurch gekennzeichnet, daß als Kupplung (20) eine Magnetkupplung ausgebildet ist.

12. Handgerät nach Anspruch 1 und 8, dadurch gekennzeichnet, daß die unteren Transportrollen (14,15) mit Abstand koaxial angeordnet sind, und die obere Transportwalze (33) die Druckunterlage für den zwischen den unteren Transportrollen (14,15) angeordneten Thermodruckkopf (26) bildet.

13. Handgerät nach einem der Ansprüche 1 bis 12, dadurch gekennzeichnet, daß der Lesekopf und der Schreibkopf zu einem einzigen Lese-Schreibkopf (30) zusammengefaßt sind.

14. Handgerät nach einem der Ansprüche 1 bis 13, dadurch gekennzeichnet, daß es eine Kerb- und Stanzeinrichtung zur Kennzeichnung der Wertkarte (9) aufweist.

15. Handgerät nach einem der Ansprüche 1 bis 14, dadurch gekennzeichnet, daß eine Schnittstelle (50) und/oder eine Infrarotwellensende-Empfangseinrichtung (7) zum Dialog mit stationären Datenverarbeitungseinrichtungen vorgesehen ist.

## Claims

1. A portable manual device for machine processing of value cards (9) comprising a housing (1), a display (3), an input keyboard (4), a computer (13), a memory, a power supply (10) and a read-write means which, for reading and varying the data contained on the value card (9) has a reading and a writing head and for rendering visible the possibly varied data content on the value card (9) a thermal printing head (26), wherein the housing (1) is provided with an insertion slot (2) and an adjoining guide path for the value card (9), in the region of which are disposed the read-write means and an electrically driven transport means, characterised in that associated with the thermal printing head (26) is a drive by means of which it is movable between a rest position and at least one printing position.

2. A portable manual device for machine processing of value cards (9) comprising a housing (1), a display (3), an input keyboard (4), a computer (13), a memory, a rower supply (10) and a read-write means which, for reading and varying the data contained on the value card (9) has a reading and a writing head and for rendering visible the possibly varied data content on the value card (9) a thermal printing head (26), wherein the housing (1) is provided with an insertion slot (2) and an adjoining guide path for the value card (9), in the region of which are disposed the read-write means and an electrically driven transport means, characterised in that associated with the printing head which is in the form of an ink jet writing head (51) is a drive by means of which it is displaceable between line printing positions which are parallel to the guide path of the value card (9) .

3. A manual device according to claim 1 or claim 2 characterised in that the input keyboard (4) has a transparent key foil (5) with which a contact plate (42) is associated, wherein provided between the key foil (5) and the contact plate (42) is an insertion slot (41) for an interchangeable key character plate (40).

4. A manual device according to claim 1 or claim 2 characterised in that the input keyboard has a liquid crystal display (41) which is covered by a touch contact foil (44), wherein the key covering is programmable.

5. A manual device according to claim 3 or claim 4 characterised in that the input keyboard (4) is back-lit with an illuminating foil (12).

6. A manual device according to claim 4 characterised in that a common, in particular back-lit liquid crystal display is provided for data display and for key display purposes, wherein a lighting sensor (6) is provided preferably at the top side of the housing (1).

7. A manual device according to claim 1 or claim 2 with a transport means for the value card (9), which has a mechanical step-down transmission (45) characterised in that the step-down transmission includes a coupling means (20) and the printing head (26, 51) of the read-write means can be coupled to the drive by way of the coupling means (20).

8. A manual device according to claim 7 characterised in that the transport means has side guide grooves (29) for the value card (9), which grooves extend inclinedly from the insertion slot (2) and are angled parallel to the top side of the housing (1), wherein provided in the angle region are an upper transport roller (33) and lower transport rollers (14, 15).

9. A manual device according to claim 7 or claim 8 characterised in that the transport means has a driven lower roller (16) with which the reading-writing head (10) is associated at the top side of the guide path.

10. A manual device according to claim 9 characterised in that the printing head is pivotable about an axis (27) under the action of an eccentric member (24) which can be coupled to the drive (11) of the transport means.

11. A manual device according to claim 9 or claim 10 characterised in that the coupling means (20) is in the form of a magnetic coupling means.

12. A manual device according to claim 1 and claim 8 characterised in that the lower transport rollers (14, 15) are arranged coaxially at a spacing and the upper transport roller (33) forms the print support for the thermal printing head (26) which is arranged between the lower transport rollers (14, 15).

13. A manual device according to one of claims 1 to 12 characterised in that the reading head and the writing head are combined to provide a single reading-writing head (10).

14. A manual device according to one of claims 1 to 13 characterised in that it has a notching and stamping means for identifying the value card (9).

15. A manual device according to one of claims 1 to 14 characterised in that an interface (50) and/or an infra-red wave transmitting-receiving means (7) is provided for dialogue with stationary data processing apparatuses.


**Revendications**

1. Dispositif manuel portatif pour le traitement mécanique de cartes de crédit (9), comprenant un boîtier (1), un écran (3), un clavier d'entrée (4), un calculateur (13), une mémoire, une source de courant (10) et un dispositif de lecture/écriture qui présente une tête de lecture et une tête d'écriture pour la lecture et la modification des données enregistrées sur la carte de crédit (9) et une tête d'impression thermique (26) jour la visualisation des données éventuellement modifiées contenues dans la carte de crédit (9), le boîtier (1) étant équipé d'une fente d'introduction (2) suivie d'une glissière de guidage pour la carte de crédit (9) dans la zone de laquelle sont disposés le dispositif de lecture/écriture et un dispositif de transport électrique, caractérisé en ce qu'un dispositif d'entraînement est associé à la tête d'impression thermique (26) à l'aide duquel elle peut être déplacée entre une position de regros et au moins une position d'impression.

2. Dispositif manuel portatif pour le traitement mécanique de cartes de crédit (9), comprenant un boîtier (1), un écran (3), un clavier d'entrée (4), un calculateur (13), une mémoire, une source de courant (10) et un dispositif de lecture/écriture qui présente une tête de lecture et une tête d'écriture pour la lecture et la modification des données enregistrées sur la carte de crédit (9) et une tête d'impression pour la visualisation des données éventuellement modifiées contenues dans la carte de crédit (9), le boîtier (1) étant équipé d'une fente d'introduction (2) suivie d'une glissière de guidage pour la carte de crédit (9) dans la zone de laquelle sont disposés le dispositif de lecture/écriture et un dispositif de transport électrique, caractérisé en ce qu'un dispositif d'entraînement est associé à la tête d'impression réalisée sous forme de tête d'impression par jet d'encre (51) à l'aide duquel elle peut être déplacée entre des positions d'impression de lignes parallèles à la glissière de guidage de la carte de crédit (9).

3. Dispositif manuel selon la revendication 1 ou 2, caractérisé en ce que le clavier d'entrée (4) présente une feuille de touches (5) transparente à laquelle est associée une plaque de contact (42), une fente d'introduction (41) pour une feuille (40) remplaçable comportant les caractères des touches étant prévue entre la feuille de touches (5) et la plaque de contac (42).

4. Dispositif manuel selon la revendication 1 ou 2, caractérisé en ce que le clavier d'entrée présente un écran à cristaux liquides (43) qui est garni d'une feuille de contact par toucher (44), l'assignation des touches étant programmable.

5. Dispositif manuel selon la revendication 3 ou 4, caractérisé en ce que le clavier d'entrée (4) est éclairé par l'arrière par une feuille luminescente (12).

6. Dispositif manuel selon la revendication 4, caractérisé en ce qu'un écran à cristaux liquides commun, en particulier éclairé par l'arrière est prévu pour l'affichage de données et de touches, un capteur d'éclairage (6) étant prévu de préférence sur le côté supérieur du boîtier (1).

7. Dispositif manuel selon la revendication 1 ou 2, comprenant un dispositif de transport pour la carte de crédit (9) qui présente un démultiplicateur mécanique (45), caractérisé en ce que le démultiplicateur comprend un accouplement (20) et la tête d'impression (26, 51) du dispositif de lecture/écriture peut être accouplée au dispositif d'entraînement par l'accouplement (20).

8. Dispositif manuel selon la revendication 7, caractérisé en ce que le dispositif de transport présente pour la carte de crédit (9) des rainures de guidage latéral (29) qui partent en biais de la fente d'introduction (2) et sont coudées parallèlement au côté supérieur du boîtier (1), un cylindre de transport supérieur (33) et des galets transporteurs inférieurs (14, 15) étant prévus dans la zone du coude.

9. Dispositif manuel selon la revendication 7 ou 8, caractérisé en ce que le dispositif de transport présente un galet inférieur entraîné (16) auquel est associée la tête de lecture/écriture (30) sur le côté supérieur de la glissière de guidage.

10. Dispositif manuel selon la revendication 9, caractérisé en ce que la tête d'impression peut pivoter en étant sollicitée par un organe excentrique (24) pouvant être accouplé au dispositif d'entraînement (11) du dispositif de transport.

11. Dispositif manuel selon la revendication 9 ou 10, caractérisé en ce que l'accouplement (20) est constitué par un accouplement à aimant.

12. Dispositif manuel selon la revendication 1 et 8, caractérisé en ce que les galets de transport inférieurs (14, 15) sont disposés coaxialement à distance l'un de l'autre et le cylindre de transport supérieur (33) sert de butée à la tête d'impression thermique (26) disposée entre les galets transporteurs inférieurs (14, 15).

13. Dispositif manuel selon l'une des revendications 1 à 12, caractérisé en ce que la tête de lecture et la tête d'écriture sont rassemblées en une seule tête de lecture/écriture (30).

14. Dispositif manuel selon l'une des revendications 1 à 14, caractérisé en ce qu'il présente un dispositif d'entaillage et de poinçonnage pour marquer la carte de crédit (9),

15. Dispositif manuel selon l'une des revendications 1 à 14, caractérisé en ce qu'un interface (50) et/ou un dispositif émetteur/récepteur d'ondes infrarouges (7) est prévu pour dialoguer avec des dispositifs stationnaires de traitement de données.

Fig.1

Fig.2

Fig.3

Fig.8

Fig.4

Fig.6

Fig. 7

Fig. 5

Fig. 9

Fig. 10

EP 0 340 222 B1